# EUROPÄISCHE PATENTSCHRIFT

(11) **EP 4 049 265 B1**
(45) Veröffentlichungstag und Bekanntmachung des Hinweises auf die Patenterteilung: **24.07.2024**
(21) Anmeldenummer: 21720682.0
(22) Anmeldetag: 30.03.2021
(51) Int. Cl.: G10G 5/00, G10H 1/32

(54) **INSTRUMENTEN- UND GERÄTE-RACK**
INSTRUMENT AND DEVICE RACK
SUPPORT POUR INSTRUMENTS ET DISPOSITIFS

(30) Priorität: 31.03.2020 DE 102020108979; 01.04.2020 DE 102020109130; 28.04.2020 DE 102020111588
(43) Veröffentlichungstag der Anmeldung: 31.08.2022
(73) Patentinhaber: Mott Mobile Systeme GmbH & Co. KG, 97941 Tauberbischofsheim (DE)
(72) Erfinder: HENKEL, Gunter, 01156 Dresden (DE)
(74) Vertreter: Schied, Sebastian
(86) Internationale Anmeldenummer: PCT/DE2021/100313
(87) Internationale Veröffentlichungsnummer: WO 2021/197547

(56) Entgegenhaltungen:
- US-A1- 2018 199 705
- ANONYMOUS: "König & Meyer 18810 >Omega< Test :: Bonedo - Pt.1/3", 8 May 2012 (2012-05-08), XP055813607, Retrieved from the Internet <URL:https://www.bonedo.de/artikel/einzelansicht/km-18810-omega.html> [retrieved on 20210614]
- ANONYMOUS: "?K&M 18820 Omega Pro Black - Thomann UK", 1 May 2019 (2019-05-01), XP055813616, Retrieved from the Internet <URL:https://www.thomann.de/gb/km_18820_omega_pro_black.htm> [retrieved on 20210614]
- ANONYMOUS: "?K&M 18811 Black - Musikhaus Thomann", 1 April 2018 (2018-04-01), pages 1 - 1, XP055814154, Retrieved from the Internet <URL:https://www.thomann.de/de/km_18811_black.htm> [retrieved on 20210615]

## Beschreibung

Die Erfindung betrifft ein modular erweiterbares Instrumenten- und Geräte-Rack mit Kabelmanagementsystem zur universellen und geordneten Aufnahme oder Ablage von elektronischen Musikinstrumenten und/oder Zubehörgeräten oder anderem erforderlichen Zubehör, wie beispielswiese nicht abschließend Lautsprecher, Mikrophon, Computer und Tablet-PC, usw. Die Modularität erlaubt einerseits die einfache Erweiterung oder Umrüstung ohne oder nur mit geringem Zwischendemontageaufwand sowie die schrittweise Erweiterung oder Veränderung. Weiterhin wird mit dem erfindungsgemäßen erweiterbaren Instrumenten-und Geräte-Rack die universelle, geordnete bzw. strukturierte und sichere Aufnahme und Anordnung jeweiligen der Musikinstrumente, Zubehörgeräte sowie dem anderen Zubehör sowie eine vorteilhaftere Bedienung dieser ermöglicht.

Das Problem an vorhandenen Lösungen besteht darin, dass wie beispielsweise in der DE 42 25 975 C1 offenbart, nur einfache Ständer für elektronische Musikinstrumente wie Keyboards oder anderen Zubehörgeräten für die Erzeugung, Gestaltung und Verarbeitung von elektronischer oder digitaler Musik oder von Ton- oder Rhythmusfolgen vorhanden sind und damit in umfangreichem Maße bei der Anordnung und jeweiligen Platzierung der entsprechenden Geräte und Instrumente improvisiert wird, was zu unübersichtlichen Anordnungen und Verkabelungen führt und somit zu erheblichen Gefahrenquellen, zu in der Lage und/oder dem Stand unsicheren Anordnungen, zu Fehlfunktionen oder Defekten damit zu zeitraubenden Fehlersuchen.

Es sind weiterhin bereits Instrumenten-Racks bekannt, welche beispielsweise von der Firma König & Meyer als Keyboard-Tisch "Omega" mit Aufsätzen angeboten werden, wobei über eine Brücke zwei T-Füßen angeordnet sind und die Beine der T-Füße als Vierkant ausgeführt sind und auf der Brücke zwei Auflagen für eine Keyboard oder alternativ dazu Auflagen für eine Platte und Stützen für ein darüber anordbares Keyboard oder eine Ablage umfassen. Nachteilig an dieser Lösung ist, dass Erweiterungen nur umständlich mit einem erheblichen Umbau oder gar Austausch von Bauteilen und damit dem Überschuss an nicht benötigten Teilen verbunden sind. Zudem sind die Möglichkeiten an Erweiterungen und deren Anordnung beschränkt. Durch die als Vierkant ausgeführten Beine der T-Füße, lassen sich etwaige seitlich Anbauten nur in vorgegeben Winkelmaßen anordnen, wodurch die Möglichkeiten und Flexibilität beschränkt sind. Die Veröffentlichung "Bonedo: König & Meyer 18810 Omega Test - Keyboard Ständer", 8. Mai 2012, URL:https://www.bonedo.de/artikel/ einzelansicht/km-18810-omega.html [gefunden am 2021-06-14], zeigt das Modell 18810 Omega eines Stahl-Ständers in Tischbauweise der Firma König & Meyer.

Die Aufgabe der vorliegenden Erfindung ist es, ein Instrumenten- und Geräte-Rack zur Aufnahme oder Ablage von elektronischen Musikinstrumenten und/oder Zubehörgeräten zu schaffen, welches einfach und bedarfsgerecht modular erweiterbar ist und zudem die universelle und geordnete Aufnahme und Anordnung der Musikinstrumente und/oder Zubehörgeräten oder anderem Zubehör.

Gemäß der vorliegenden Erfindung wird zur Lösung dieser Aufgabe ein modulares Instrumenten-und Geräte-Rack mit den Merkmalen des unabhängigen Anspruchs 1 bereitgestellt. Vorteilhafte Ausgestaltungen der vorliegenden Erfindung ergeben sich durch die Merkmale der Unteransprüche.

Mit der Erfindung wird im angegebenen Anwendungsfall erreicht, dass Instrumenten- und Geräte-Rack zur Aufnahme oder Ablage von elektronischen Musikinstrumenten und/oder Zubehörgeräten sowie anderem Zubehör geschaffen wird, wobei zwei teleskopartig höhenverstellbare T-Fußelemente über eine Verbindungsbrücke verbunden sind. An der Verbindungsbrücke sind zumindest zwei Auflageelemente für eine Ablageplatte lösbar befestigt. Je nach Bedarf ist eine Ablageplatte vorgesehen oder vorhanden oder kann auch weggelassen werden, so dass ein Musikinstrument unmittelbar darauf gestellt werden kann. Ist eine Ablageplatte vorhanden, lässt sich die Ablageplatte auf die Auflageelemente legen. Zudem kann die Ablageplatte an den Auflageelementen befestigt, fixiert oder gesichert werden. Die Ablageplatte kann unterschiedliche Breiten und Tiefen oder Ausschnitte oder Aussparungen aufweisen. An den zumindest zwei Auflageelementen ist über jeweils ein Verbindungselementes jeweils ein Stützelement und an dem jeweiligen Stützelement jeweils zumindest ein Erweiterungselement in zumindest einer zu den Auflageelementen abweichenden Höhe und über eine Winkelverstellung in der Neigung fest lösbar anordbar. Somit sind zumindest zwei Erweiterungselemente vorhanden.

Die zumindest zwei Erweiterungselemente sind bevorzugt in der jeweils gleichen Höhe und Neigung angeordnet. Bei zwei oder mehr Erweiterungselementen sind diese beispielsweise jeweils somit paarweise und/oder gruppiert angeordnet. Die jeweiligen paarweise und/oder gruppiert angeordneten Erweiterungselemente bilden beispielsweise eine Erweiterungsebene. Bei zwei oder mehr übereinander anzuordnenden Erweiterungselementen sind die jeweiligen Erweiterungselemente jeweils mit einem gemeinsamen Stützelement an dem jeweiligen Auflageelement angeordnet. Somit bilden zwei oder mehr übereinander anzuordnende Erweiterungselemente beispielsweise entsprechende Erweiterungsebenen.

Die jeweiligen Erweiterungselemente lassen sich jeweils über eine Winkelverstellung in der Neigung anpassen.

Vorteilhaft lassen sich in oder mit der jeweiligen Winkelverstellung die jeweiligen Erweiterungselemente in ihrer Tiefe oder Länge unabhängig von den oder gegenüber den jeweiligen Stützelementen verschieben bzw. einstellen.

Beispielsweise lässt sich die jeweilige Winkelverstellung am jeweiligen Stützelement in der gewünschten Höhe anordnen oder verändern, so dass sich die jeweiligen Erweiterungselemente mit der jeweiligen Winkelverstellung entsprechend in der gewünschten Höhe anordnen lassen.

Die Winkelverstellung kann einteilig oder mehrteilig aufgeführt sein. Die Winkelverstellung umfasst ein, zwei oder mehr Winkelverstellbleche bezeichnet, die am oder um das jeweilige Stützelement und jeweilige Erweiterungselement angeordnet. Die Winkelverstellbleche der Winkelverstellung sind zumindest jeweils seitlich an gegenüberliegenden Seiten am jeweiligen Stützelement und jeweiligen Erweiterungselement angeordnet und/oder umgreifen zumindest teilweise zumindest das jeweilige Erweiterungselement. Damit ist auch eine einteilige Ausführung Winkelverstellung beispielsweise als gekantetes Winkelverstellblech möglich.

Zudem sind in der Winkelverstellung bzw. im jeweiligen Winkelverstellblech der Winkelverstellung eine Vielzahl bogenförmig nebeneinander angeordnet Durchbrüche oder Bohrungen für eine Einstellung und Fixierung im entsprechenden Neigungswinkel vorhanden. Diese jeweiligen Durchbrüche oder Bohrungen sind in Bezug auf die seitliche Lage des jeweiligen Winkelverstellbleches der Winkelverstellung an den gegenüberliegenden Seiten am jeweiligen Stützelement und jeweiligen Erweiterungselement deckungsgleich. Zudem ist im jeweiligen Stützelement und jeweiligen Erweiterungselement passend zu den jeweiligen Durchbrüchen oder Bohrungen des jeweiligen Winkelverstellbleches der Winkelverstellung jeweils zumindest eine einzelne Bohrung oder ein einzelner Durchbruch vorhanden, so dass ein Befestigungsmittel, wie beispielsweise eine Schraube oder ein Bolzen, in entsprechender Winkelstellung und Lage durch eine der jeweiligen Durchbrüche oder Bohrungen des jeweiligen Winkelverstellbleches der Winkelverstellung und die zumindest eine einzelne Bohrungen oder Durchbrüche des jeweiligen Stützelementes und jeweiligen Erweiterungselementes geführt werden können.

Über entsprechend angeordnete Langlöcher im jeweiligen Winkelverstellblech der Winkelverstellung und passend dazu entsprechend angeordneten Bohrungen im jeweiligen Stützelement und/oder jeweiligen Erweiterungselement lässt sich vorteilhaft die Länge, die Lage und/oder Höhe des jeweiligen Erweiterungselementes einstellen.

Es ist weiterhin nicht ausgeschlossen, dass jeweils ein Erweiterungselement eine eigene Erweiterungsebene bildet, die entsprechend unabhängig von dem benachbarten Erweiterungselement bzw. dessen Erweiterungsebene ausgerichtet bzw. angeordnet ist. Derartige Konstellationen sind beispielweise bei kleineren Musikinstrumenten und/oder Zubehörgeräten oder Komponenten denkbar, die sich nicht über zwei benachbarte Erweiterungselemente erstrecken oder erstrecken müssen.

Hierdurch ergibt sich eine modulare Bauweise die eine beliebige Erweiterbarkeit ermöglicht, ohne wesentlich Demontage durchführen zu müssen. Zudem lassen sich die einzelnen grundlegenden Teile oder Einzelteile bei einer Erweiterungen oder Reduzierung weiterverwenden, ohne sie austauschen zu müssen. Weiter wird durch das erfindungsgemäße Instrumenten- und Geräte-Rack eine strukturierte Anordnung der jeweiligen Musikinstrumente, Zubehörgeräte und dem weiteren Zubehör erreicht, wodurch sich die Bedienung oder die Arbeit am oder mit dem Rack erheblich verbessert und die Zuverlässigkeit des funktionellen Zusammenwirkens verbessert. Zudem lässt sich die Verkabelung der einzelnen Musikinstrumente, Zubehörgeräte und dem weiteren Zubehör zur Vermeidung von Stolperfallen oder versehentlichen Abziehen oder Hängenbleiben vorteilhaft verlegen und auf wenige oder ein einziges das Instrumenten- und Geräte-Rack verlassendes Kabel reduzieren.

Die teleskopartig höhenverstellbaren T-Fußelemente umfassen neben Einfach-T-Fußelementen mit nur einem teleskopartigen höhenverstellbaren, also damit vertikalen Abschnitt auch Doppel- oder Mehrfach-T-Fußelemente mit zwei oder mehr teleskopartigen vertikalen Abschnitten im vertikalen Bereich. So kommen auch Drei- oder Vierfach-T-Fußelemente mit entsprechender Anzahl teleskopartigen vertikalen Abschnitten in Betracht.

Die einzelnen Musikinstrumente, Zubehörgeräte und dem weiteren Zubehör lassen sich verkürzt auch als Komponenten bezeichnen, die zur jeweiligen Musikproduktion zum Einsatz kommen können. Dabei ist die konkrete Bezeichnung als Musikinstrument, Zubehörgerät und weiteres Zubehör keineswegs abschließend und nur beispielhaft aufgeführt.

Vorteilhafte Ausgestaltungen der Erfindung sind in den Unteransprüchen dargestellt. Vorteilhaft ist das jeweilige Stützelement verlängerbar, wobei in ein erstes oder unteres Stützelement oder in einen ersten oder unteren Stützelementabschnitt ein weiteres Stützelement oder eine weiterer Stützelementabschnitt gesteckt wird. Dieses weitere Stützelement oder der weitere Stützelementabschnitt ist dafür im Überlappungsbereich verjüngt. Ebenso kann das erste oder untere Stützelement oder der erste oder untere Stützelementabschnitt im Überlappungsbereich verjüngt sein und das weitere Stützelement oder der weitere Stützelementabschnitt wird auf das erste oder untere Stützelement oder den ersten oder unteren Stützelementabschnitt gesteckt.

Alternativ lassen sich die Stützelemente oder Stützelementabschnitte mit jeweils einem im Verbindungsbereich eingeschobenen Verbindungstück verbinden, wobei das Verbindungstück zum jeweiligen Stützelement oder Stützelementabschnitt entsprechend Überlappungsbereiche aufweist. Die Stützelemente oder Stützelementabschnitte überlappen sich dabei nicht. Eine unauffällige Verlängerung des jeweiligen Stützelementes ist damit einfacher möglich. Zudem sind individuelle Verlängerungen und Kombinationen von unterschiedlich langen Stützelementen möglich.

Indem das jeweilige Stützelement am jeweiligen Auflageelement in der Höhe und/oder Neigung verstellbar angeordnet ist, lassen sich die jeweiligen Stützelemente unabhängig vom jeweiligen Erweiterungselement entsprechend der Bedürfnisse anpassen. Zudem wird eine zusätzliche Variabilität und Vereinfachung erreicht, da unterschiedliche lange Stützelemente zum Einsatz kommen können, die sich entlang ihrer Längserstreckung entsprechend am Auflageelement anordnen lassen.

Gemäß einer Alternative der Erfindung ist das jeweilige Stützelement am jeweiligen Verbindungselement in der Neigung verstellbar angeordnet.

In einer Weiterbildung ist das jeweilige Stützelement am zumindest einen Verbindungselement in der Höhe und Neigung verstellbar angeordnet. Hierdurch wird eine konstruktive Vereinfachung erreicht, die es erlaubt unterschiedliche Stützelemente oder unterschiedliche Arten oder Ausführungen von Stützelemente einzusetzen und diese mit reduziertem Aufwand zu montieren, anzupassen oder zu demontieren.

Gemäß einer weiteren Alternative der Erfindung ist das zumindest eine Verbindungselement in der Lage und/oder Neigung mit dem jeweiligen Auflageelement verstellbar verbunden oder angeordnet, so dass hierdurch eine zusätzliche Anpassung und Einstellmöglichkeit gegeben ist.

Indem die jeweiligen Erweiterungselemente am jeweiligen Stützelement über die Winkelverstellung in der Höhe, Lage oder Tiefe verstellbar angeordnet sind, lassen sich die jeweiligen Erweiterungselemente unabhängig vom jeweiligen Stützelement entsprechend der Bedürfnisse anpassen. Bei zwei oder mehr übereinander anzuordnenden Erweiterungselementen lassen sich die jeweiligen Erweiterungselemente, die einzeln oder gegebenenfalls paarweise oder gruppiert in der gleichen Höhe angeordnet sind, unabhängig von den anderen, gegebenenfalls in einer anderen Erweiterungsebene angeordneten Erweiterungselementen, individuell anordnen bzw. ausrichten. Hierdurch wird die Variantenvielfalt verbessert und zudem eine konstruktive Vereinfachung erreicht, die es erlaubt die jeweiligen Erweiterungselemente mit reduziertem Aufwand zu montieren, anzupassen oder zu demontieren.

In einer Weiterbildung sind die jeweiligen Erweiterungselemente jeweils oder einzeln in der Länge stufenlos veränderbar und/oder über einen Querhalter miteinander verbunden, so dass sich die Erweiterungselemente je nach Nutzung und Gruppierung an die abzulegenden Musikinstrumente und/oder Zubehörgeräte oder Komponenten anpassen lassen. Zudem lässt sich damit auch die Relativlage der abzulegenden Musikinstrumente und/oder Zubehörgeräte oder Komponenten zum Nutzer anpassen.

Indem die jeweiligen Erweiterungselemente eine Ablage bilden oder einen Ablageboden tragen, lassen sich auf oder in der jeweiligen, durch ein, zwei oder Erweiterungselemente gebildeten Erweiterungsebene individuell die Musikinstrumente und/oder Zubehörgeräte oder Komponenten anordnen. Je nach Größe der Musikinstrumente und/oder Zubehörgeräte oder Komponenten ist ein Ablageboden erforderlich oder entbehrlich.

Indem zumindest die vertikalen Abschnitte der T-Fußelemente zumindest ein Teleskoprundrohr aufweisen, wobei an zumindest einem der Teleskoprundrohre ein seitlicher Anbau fest lösbar und/oder schwenkbar und/oder vertikal verstellbar anbringbar ist, lassen sich die seitlichen Anbauten um die vertikale Achse des vertikalen Abschnittes stufenlos in beliebige Winkelstellungen drehen und dort fest lösbar anbringen, also daran fest lösbar befestigen.

Die stufenlose Einstellbarkeit in beliebige Winkelstellungen erlaubt es den seitlichen Anbauten, dass diese bei entsprechend tiefer Ablageplatte hinter die Ablageplatte stufenlos gedreht und in dieser Position befestigt zu werden. So finden auch sehr breite Instrumente oder zwei Instrumente nebeneinander auf dem Rack bzw. der Ablageplatte Platz, ohne dass die seitlichen Anbauten demontiert werden müssen oder den notwendigen Raum belegen. Auch können damit sehr breite, also seitlich ausladende Ablageplatten zum Einsatz kommen.

Indem der zumindest eine seitliche Anbau beispielsweise zumindest einen Schwenkarm, eine Plattform, eine Ablage und/oder eine Halterung umfasst, lassen sich weitere Musikinstrumente und/oder Zubehörgeräte oder Komponenten, wie beispielsweise nicht abschließend Lautsprecher, Mikrofone oder tragbare Computer oder Unterlagen oder Noten bedarfsgerecht anordnen. Umfasst sind auch andere entsprechende Zubehörteile oder Hilfsmittel, welche an dem seitlichen Anbau anbringbar sind. Je nach Bedarf lassen sich der Schwenkarm, die Plattform, die Ablage und/oder die Halterung jeweils individuell und unabhängig anordnen und kombinieren. Dabei lassen sich der Schwenkarm, die Plattform, die Ablage und/oder die Halterung einzeln, gruppiert oder kombiniert beliebig und je Seite in unterschiedlicher Anzahl und Kombination anordnen. Der Schwenkarm, die Plattform, die Ablage und/oder die Halterung kann auch weglassen werden.

In einer Weiterbildung umfasst der zumindest eine seitliche Anbau ein Rundrohr als vertikales Halteelement, wobei der zumindest eine Schwenkarm, die zumindest eine Plattform, die zumindest eine Ablage und/oder die zumindest eine Halterung an dem vertikalen Halteelement in unterschiedlichen Höhen fest lösbar und/oder schwenk- und vertikal verstellbar anbringbar sind. Hierdurch lassen sich der zumindest eine Schwenkarm, die zumindest eine Plattform oder Ablage oder die zumindest eine Halterung individuell anordnen. Eine Erweiterung und Änderung sind für die genannten als auch für andere nicht genannte Zubehörteile oder Hilfsmittel einfach möglich.

Zusätzlich kann der Schwenkarm zumindest ein Gelenk aufweisen. Das Gelenk kann an zumindest einem der Enden des Schwenkarmes und/oder zusätzlich in dessen Verlauf oder Erstreckung vorhanden sein. Je nach Lage des jeweiligen Gelenkes weist der Schwenkarm zumindest einem Armbereich oder zwei oder mehr Armbereiche auf. Das jeweilige Gelenk ist so beschaffen, dass der Schwenkarm oder der jeweilige Armbereich um eine vertikale und/oder horizontale Achse zumindest einmal abwinkelbar ist.

So kann der Schwenkarm zumindest in einem der Bereiche der jeweiligen Befestigung wie am vertikalen Halteelement und/oder der seitliche Anbau im Bereich der Befestigung am vertikalen Abschnitt der T-Fußelemente ein Gelenk oder Gelenkabschnitt aufweisen, so dass auch in diesen Bereich ein zusätzliche Schwenken des Schwenkarms und/oder seitlichen Anbaus ermöglicht wird, ohne die jeweilige Halterung oder Befestigung lösen zu müssen. Ein Schwenkarm kann daher auch nur einen Armbereich aufweisen.

Indem zumindest ein Gehäuse und/oder zumindest ein Aufnahmefach und/oder Ablagefach vorhanden ist, lassen sich darin Zubehörgeräte oder Komponenten funktionssicher und geordnet aber auch übersichtlicher integrieren bzw. anordnen. Unterschiedliche Zubehörgeräte oder Komponenten sind nur von vom bedienbar und/oder lassen sich stapeln. Für andere Zubehörgeräte oder Komponenten ist ein vertikaler Betrieb oder vertikale Lagerung oder Aufstellung vorgesehen oder gefordert oder ergibt sich aus der Bauweise.

Indem das zumindest eine Gehäuse und/oder das zumindest eine Aufnahmefach und/oder Ablagefach an den zumindest zwei Auflageelementen und/oder an zusätzlichen Befestigungselementen an der Verbindungsbrücke und/oder an der Verbindungsbrücke und/oder am vertikalen Abschnitt zumindest eines der T-Fußelemente fest lösbar befestigt angeordnet sind, wird eine effizientere Bedienung der in dem zumindest einen Gehäuse und/oder dem zumindest einen Aufnahmefach angeordneten Zubehörgeräte oder Komponenten erreicht. Zudem lassen sich alle Zubehörgeräte oder Komponenten sowie die weiteren Zubehörgeräte oder Musikinstrumente auf kurzem Wege verkabeln.

Das zumindest eine Gehäuse und/oder das zumindest eine Aufnahmefach und/oder Ablagefach kann in unterschiedlichen Höhen angeordnet sein.

Das zumindest eine Gehäuse und/oder das zumindest eine Aufnahmefach und/oder Ablagefach kann unterschiedliche Höhen, Breiten und/oder Tiefen aufweisen.

Indem die Gehäuse oder Aufnahmefächer oder Ablagen vor oder unter der Verbindungsbrücke und im Bereich zwischen den T-Fußelemente vorhanden sind, wird die Bedienung und Überwachung der darin untergebrachten Zubehörgeräte oder Komponenten vereinfacht.

Indem eine ausziehbare Ablagefläche an den Auflageelementen oder zwischen den Aufnahmefächern und/oder zwischen zwei Erweiterungselementen und/oder an den zusätzlichen Befestigungselementen an der Verbindungsbrücke und/oder an der Verbindungsbrücke angeordnet ist, lassen sich Tastaturen oder Unterlagen ablegen und bei Bedarf durch ein Einschieben der Ablagefläche aus dem Sichtbereich ausblenden oder verstecken oder weglegen, so dass diese jeweils auf der Ablagefläche auf- oder abgelegten Gegenstände oder Unterlagen zumindest vorrübergehend nicht stören.

Indem das Gehäuse ein 19-Zoll-Rack-Gehäuse ist, lassen sich entsprechend geeignete oder angepasste oder passende Zubehörgeräte oder Komponenten lagesicher und geordnet im Gehäuse anordnen. Ein versehentliches Verschieben oder Kippen kann vermieden werden.

Indem an den Auflageelementen und/oder an der Verbindungsbrücke zumindest eine Steckdosen oder eine Stromverteilerleiste oder Befestigungen für zumindest eine Steckdose oder Stromverteilerleiste angeordnet sind, lassen sich die notwendigen Verkabelungen direkt am Rack und auf kurzen Wegen realisieren. Umständliche und für Fehler anfällige Verkabelungen lassen sich vermeiden. Stromverteilerleisten umfassen auch Steckdosen. Damit stellen die Stromverteilerleisten auch die an sich übliche Netzspannung von beispielswiese 230V zum Betreiben der meisten Zubehörgeräten oder Komponenten oder Instrumente Verfügung.

Die Stromverteilerleiste stellt je nach Bedarf auch zusätzlich oder alternativ zumindest eine Niederspannung in zumindest einem Spannungsbereich bereit. Spannungsbereiche können beispielsweise 5V, 9V und/oder 12V sein. Andere bzw. weitere Spannungsbereiche wie 18V, 24V oder 36V oder andere nicht genannte Spannungsbereiche sind nicht ausgeschlossen. Vorteilhaft wird dadurch vermieden, dass jedes einzelne Zubehörgerät oder jede Komponente, welche eine Betriebsspannung benötigen, die von der üblichen Netzspannung abweicht, nicht ein eigenes Netzteil oder Stecknetzteil benötigt sondern von einer zentralen Stromversorgung mit der notwendigen Betriebsspannung versorgt wird. Unübersichtliche Verkabelungen und ineffizient genutzte Steckdosen und damit verschenkter Raum werden vermieden. Zudem werden durch die zentrale Versorgung mit Niederspannung die üblicherweise eingesetzten Schaltnetzteile ersetzt und damit die Emission elektromagnetischer Strahlung bedingt durch die einzelnen bisher üblicherweise eingesetzten Schaltnetzteile minimiert, was sich positiv auf die Signalverarbeitung der Zubehörgeräten oder Komponenten und auf den Nutzer auswirkt.

Zudem können auch Kabelkanäle oder Kabelführungen wie z.B. Kabelklemmen vorhanden sein, die eine geordnete und zuverlässige Verkabelung begünstigen und es lassen sich mit entsprechend geeigneten Kabelkanälen und Kabelführungen auch ungünstige Streu- und Störeinflüsse auf die und zwischen den Signalleitungen minimieren.

Indem zumindest eine Beleuchtung vorgesehen ist, werden zusätzliche Lichtquellen nicht benötigt. Zudem werden eine ungünstige Schattenbildung einer separaten Beleuchtung sowie eine störende Installation und Verkabelung der zusätzlich anzubringenden oder auszustellenden Beleuchtung vermieden. Beispielsweise ist die Beleuchtung in oder an zumindest einem der Erweiterungselemente vorhanden oder integriert. Zudem kann die Beleuchtung im Querhalter integriert sein. Auch ist eine Anordnung einer Beleuchtung, beispielsweise als Langfeldleuchte zwischen zwei Erweiterungselementen möglich. Die Beleuchtung kann in die Erweiterungselemente eingehangen sein.

Indem ein Hauptschalter und/oder Beleuchtungsschaltern im vorderen Bereich an zumindest einem der Auflageelementen und/oder Erweiterungselemente und/oder an der Ablageplatte vorhanden ist, lassen sich mit nur wenigen und einfachen Handgriffen die gesamte Anlage und gegebenenfalls zusätzlich das Licht einschalten und abschalten. Ein umständliches suchen des jeweiligen Schalters kann entfallen, da diese gut erreichbar und je nach konkreter Anordnung gegebenenfalls zudem sichtbar sind.

Indem am zumindest einen Gehäuse und/oder am zumindest einen Aufnahmefach und/oder am vertikalen Abschnitt zumindest eines der T-Fußelemente eine feststehende oder bewegliche Aufnahmelochplatte angeordnet ist, lassen sich Kabel oder andere Hilfsmittel geordnet vorhalten. So lassen sich einsteckbare oder aufhängbare Patchkabel aufnehmen. Es ist dabei nicht ausgeschlossen, dass diese Aufnahmelochplatte als Platzhalter für bereits einseitig schon in Komponenten oder Netzwerkgeräten gesteckten Kabel dient, die im Bedarfsfall nur noch einseitig am jeweiligen Instrument, Zubehörgerät oder einer Komponente zu stecken sind. Dabei können weiterhin eine oder mehrere Kabelaufwicklungen vorgesehen sein, die für Ordnung und Übersichtlichkeit und für zunächst kurze Kabelabschnitte sorgen, wodurch Stolperfallen oder Fehler in der Verbindung bzw. Verkabelung vermieden werden können.

Mehrere Ausführungsbeispiele der Erfindung sind in den Zeichnungen dargestellt und werden im Folgenden näher beschrieben. Es zeigen:
Fig. 1 in räumlicher Darstellung ein modulares Instrumenten- und Geräte-Rack in einer einfachen Ausführung,
Fig. 2 in räumlicher Darstellung ein modulares Instrumenten- und Geräte-Rack in einer einfachen Ausführung mit seitlichen Anbauten,
Fig. 3 in räumlicher Darstellung ein modulares Instrumenten- und Geräte-Rack in einer erweiterten Ausführung,
Fig. 4 in räumlicher Darstellung ein modulares Instrumenten- und Geräte-Rack in einer einfachen Ausführung mit Ablagen,
Fig. 5 in räumlicher Darstellung ein modulares Instrumenten- und Geräte-Rack in einer erweiterten Ausführung mit Ablagen und seitlichen Anbauten,
Fig. 6 in räumlicher Darstellung ein modulares Instrumenten- und Geräte-Rack in einer erweiterten Ausführung mit Ablagen, Gehäuse und seitlichen Anbauten,
Fig. 7 in räumlicher Darstellung ein modulares Instrumenten- und Geräte-Rack in einer einfachen Ausführung mit Ablagen und seitlichen Anbauten,
Fig. 8 und 9 in räumlicher Darstellung ein modulares Instrumenten- und Geräte-Rack in einer erweiterten Ausführung mit Ablagen und seitlichen Anbauten und
Fig. 10 in räumlicher Darstellung von hinten ein modulares Instrumenten- und Geräte-Rack in einer einfachen Ausführung.

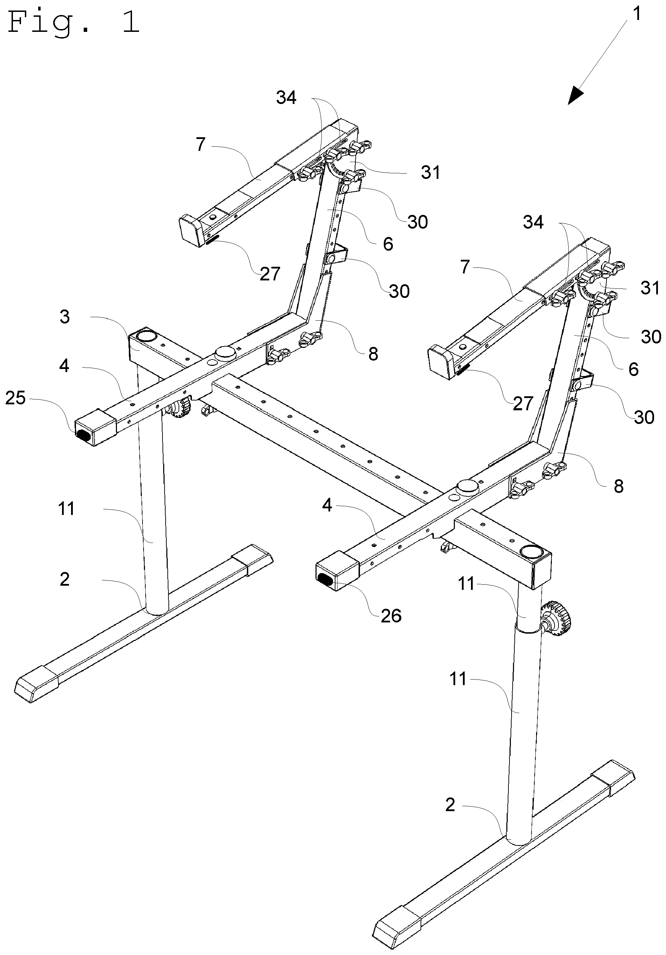

Die Fig. 1 zeigt in räumlicher Darstellung ein erfindungsgemäßes modulares Instrumenten-und Geräte-Rack 1 zur Aufnahme oder Ablage von elektronischen Musikinstrumenten und/oder Zubehörgeräten, wobei zwei teleskopartig höhenverstellbare T-Fußelemente 2 über eine Verbindungsbrücke 3 verbunden sind und an der Verbindungsbrücke 3 zumindest zwei Auflageelemente 4 für eine nicht dargestellte Ablageplatte 5 lösbar befestigt sind, wobei an den zumindest zwei Auflageelementen 4 über jeweils ein Stützelement 6 jeweils zumindest ein Erweiterungselement 7 in zumindest einer zu den Auflageelementen 4 abweichenden Höhe und Neigung fest lösbar angeordnet sind. Die Neigung des jeweiligen Erweiterungselementes 7 lässt sich jeweils mittels einer Winkelverstellung 31 stufig einstellen. Die Winkelverstellung 31 umfasst in einer hierbei zwei Winkelverstellbleche 31, die jeweils seitlich an gegenüberliegenden Seiten am jeweiligen Stützelement 6 und jeweiligen Erweiterungselement 7 angeordnet sind. Eine einteilige Ausführung beispielsweise eines gekanteten Winkelverstellbleches 31 als Winkelverstellung 31, die beispielsweise das jeweilige Erweiterungselement 7 zumindest bereichsweise umgibt, ist ebenfalls möglich. Weiterhin sind in der Winkelverstellung 31 bzw. im jeweiligen Winkelverstellblech 31 der Winkelverstellung 31 bogenförmig nebeneinander angeordnet Durchbrüche für eine Einstellung und Fixierung im entsprechenden Neigungswinkel vorhanden. Die Winkelverstellung 31 ist hier jeweils am jeweiligen Erweiterungselement 7 vorhanden. Die jeweilige Winkelverstellung 31 ist am jeweiligen Stützelement 6 in der gewünschten Höhe angeordnet, so dass auch das jeweilige Erweiterungselement 7 in der entsprechenden Höhe am jeweiligen Stützelement 6 angeordnet ist. Eine Veränderung der Höhe ist durch einen entsprechenden Umbau möglich.

Langlöcher 34 im jeweiligen Winkelverstellblech 31 der Winkelverstellung 31 im Bereich des jeweiligen Erweiterungselementes 7 und passende Bohrungen dazu im jeweiligen Erweiterungselement 7, durch welche Schrauben oder Bolzen geführt sind, erlauben eine stufenlose Veränderung und Einstellung der Länge des jeweiligen Erweiterungselementes 7.

Die jeweiligen Stützelemente 6 sind jeweils mit Verbindungselementen 8 an den zwei Auflageelementen 4 angeordnet. Die beiden teleskopartig höhenverstellbaren T-Fußelemente 2 sind jeweils als Einfach-T-Fußelemente 2 mit jeweils im vertikalen Abschnitt 11 einem Teleskoprundrohr 11 ausgeführt. An den Stützelementen 6 sind rückseitig zudem Kabelhalter 30 vorhanden.

Die jeweiligen Verbindungselemente 8 weisen ebenfalls Durchbrüche für eine Einstellung und Fixierung im entsprechenden Neigungswinkel auf. Derzeit sind die Verbindungselemente 8 in einer Mittelstellung an den an den zwei Auflageelementen 4 angeordnet.

Weiterhin ist eine Beleuchtung 27 jeweils am vorderen Ende an der Unterseite der beiden in einer Ebene paarweise benachbarten Erweiterungselementen 7 angeordnet.

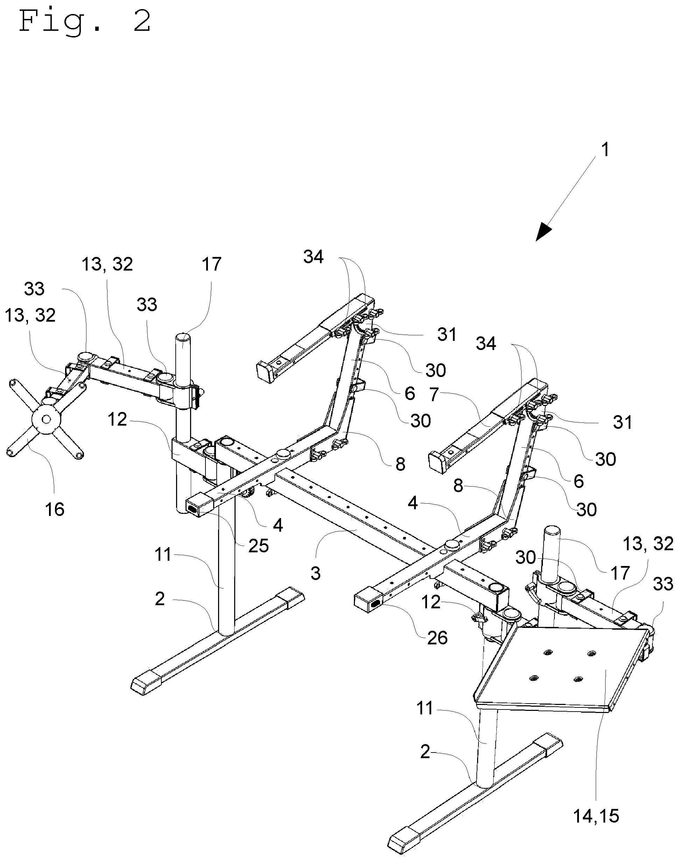

Die Fig. 2 zeigt ein erfindungsgemäßes modulares Instrumenten- und Geräte-Rack 1 gemäß der Figur 1, wobei abweichend oder ergänzend zur Figur 1 jeweils seitlich an den Teleskoprundrohren 11 der vertikalen Abschnitte 11 der T-Fußelemente 2 jeweils ein seitlicher Anbau 12 fest lösbar schwenkbar angebracht ist. Der seitliche Anbau 12 umfasst jeweils einen vertikalen Haltebereich 17 in Form eines Rundrohres, an dem jeweils ein abgewinkelter Schwenkarm 13 mit einem Gelenk angeordnet ist, so dass der Schwenkarm 13 zwei Armbereiche 32 aufweist, die mit einem dazwischenliegendem Gelenk 33 verbunden sind, wobei an einem der Schwenkarme 13 eine Ablage 15 und an dem anderen Schwenkarm 13 eine Halterung 16 vorhanden ist. An den Stützelementen 6 sowie an den Schwenkarmen 13 bzw. deren zwei Armbereiche 32 und den seitlichen Anbauten 12 sind rückseitig ebenfalls Kabelhalter 30 vorhanden.

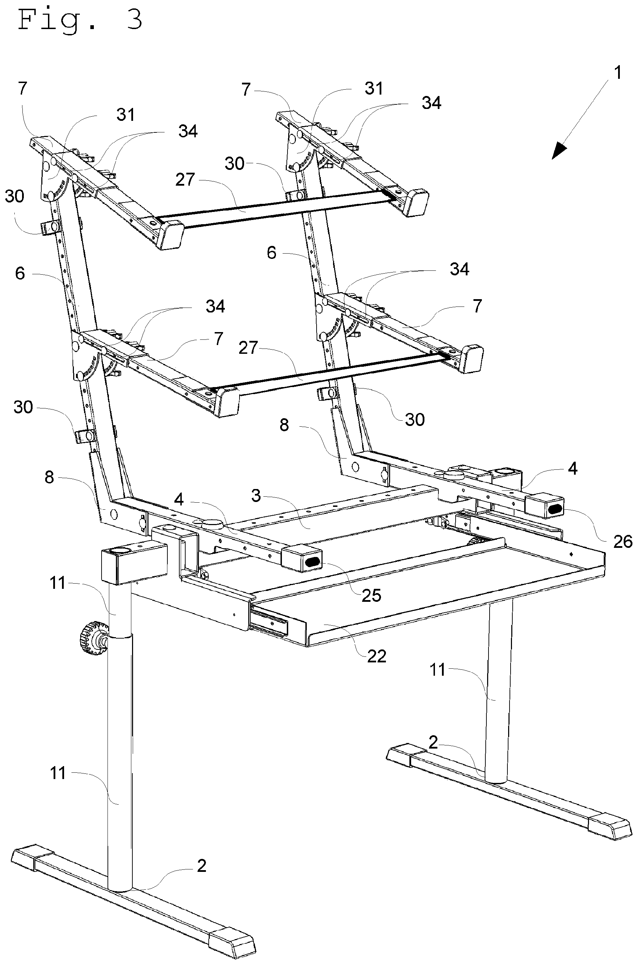

In der Fig. 3 ist ein erfindungsgemäßes modulares Instrumenten- und Geräte-Rack 1 gemäß der Figur 1 dargestellt, wobei abweichend oder ergänzend zur Figur 1 an den zumindest zwei Auflageelementen 4 über jeweils ein Stützelement 6 jeweils zwei zusätzliche Erweiterungselemente 7 paarweise in gleicher Höhe angeordnet sind. Die jeweiligen Erweiterungselemente 7 sind jeweils in einer zu den Auflageelementen 4 abweichenden Höhe und Neigung jeweils über Winkelverstellungen 31 an den jeweiligen Stützelementen 6 fest lösbar angeordnet., Die jeweiligen Erweiterungselemente 7 sind jeweils mit dem gemeinsamen Stützelement 6 über jeweils ein Verbindungselement 8 an dem jeweiligen Auflageelement 4 angeordnet. An der Verbindungsbrücke 3 eine ausziehbare Ablagefläche 22 angeordnet ist, die sich unterhalb der Verbindungsbrücke 3 ein- und ausziehen bzw. verschieben lässt. Zwischen den jeweils zwei in einer Ebene paarweise benachbarten Erweiterungselementen 7 sind Beleuchtungen 27 als Langfeldleuchte oder als Leuchtstreifen angeordnet. An den Stützelementen 6 sind rückseitig Kabelhalter 30 vorhanden.

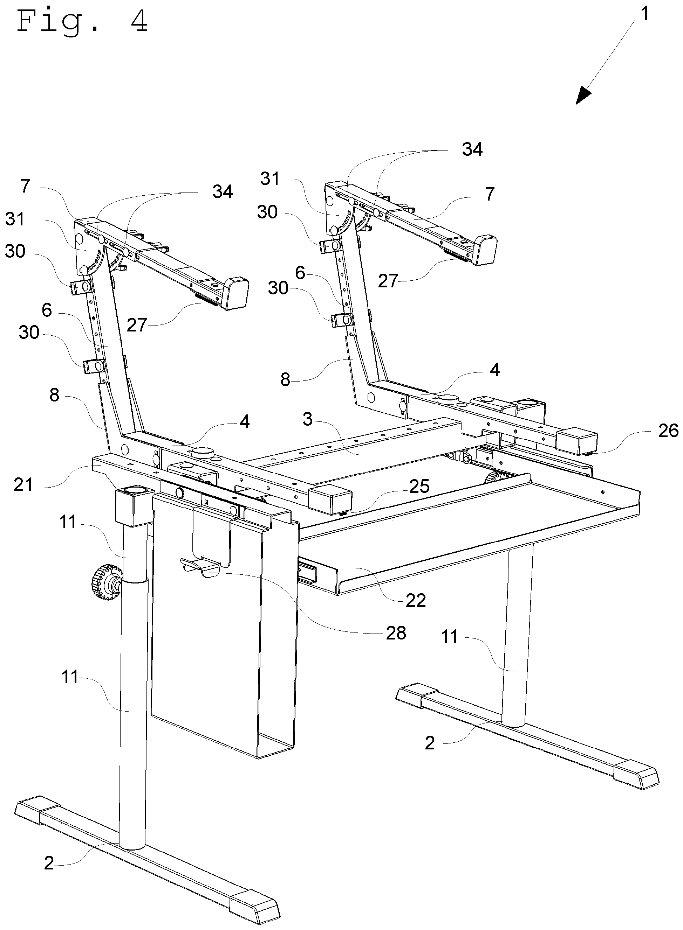

Die Fig. 4 zeigt ein erfindungsgemäßes modulares Instrumenten- und Geräte-Rack 1 gemäß der Figur 1, wobei abweichend oder ergänzend zur Figur 1 an der Verbindungsbrücke 3 eine ausziehbare Ablagefläche 22 angeordnet ist, dies sich unterhalb der Verbindungsbrücke 3 ein-und ausziehen bzw. verschieben lässt und wobei an der Verbindungsbrücke 3 seitlich der ausziehbare Ablagefläche 22 ein hochkant angeordnetes Aufnahmefach 19 oder Ablagefach 20 vorhanden ist. Das Aufnahmefach 19 oder Ablagefach 20 ist an einem zusätzlichen Befestigungselement 21 an der Verbindungsbrücke 3 angeordnet. Mit am zusätzlichen Befestigungselement 21 neben dem Aufnahmefach 19 oder Ablagefach 20 ist ein Kopfhörerhalter 28 angeordnet. Die Beleuchtung 27 ist in diesem Fall jeweils am vorderen Ende an der Unterseite der beiden in einer Ebene paarweise benachbarten Erweiterungselementen 7 angeordnet. An den Stützelementen 6 sind rückseitig Kabelhalter 30 vorhanden.

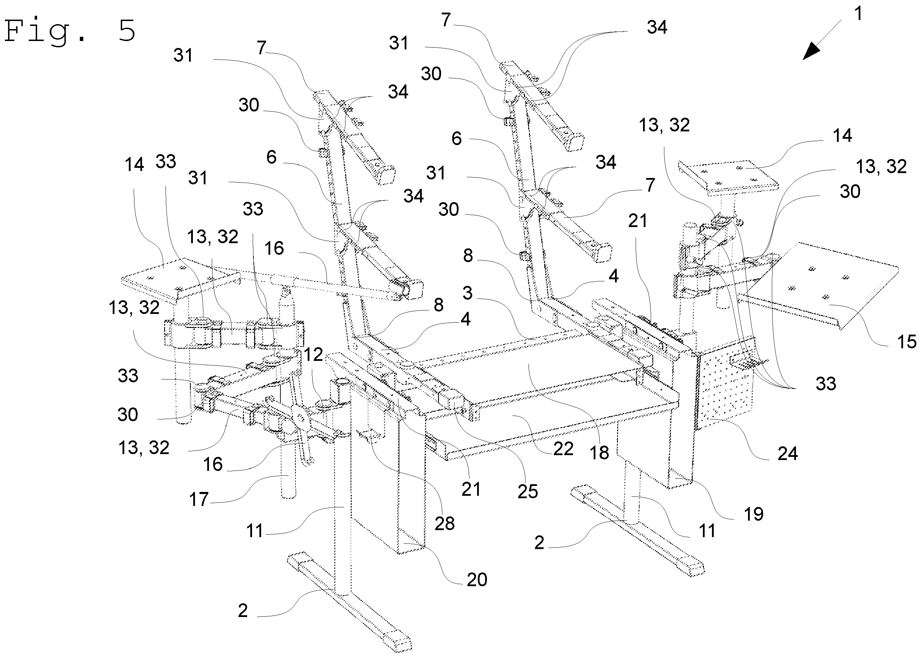

Die Ausführung, dargestellt in Fig. 5, zeigt ein erfindungsgemäßes modulares Instrumenten-und Geräte-Rack 1 gemäß der Figur 3, wobei abweichend oder ergänzend zur Figur 3 jeweils seitlich der ausziehbaren Ablagefläche 22 ein hochkant angeordnetes Aufnahmefach 19 oder Ablagefach 20 vorhanden ist.Das jeweilige Aufnahmefach 19 oder Ablagefach 20 ist an zusätzlichen Befestigungselementen 21 an der Verbindungsbrücke 3 angeordnet. Am zusätzlichen Befestigungselement 21 und neben dem linken Aufnahmefach 19 oder Ablagefach 20 ist ein Kopfhörerhalter 28 angeordnet. Am rechten Aufnahmefach 19 oder Ablagefach 20 ist eine bewegliche Aufnahmelochplatte 24 angeordnet. Zwischen und an den Auflageelementen 4 ist ein Gehäuse 18 als 19-Zoll-Gehäuse mit einer Höheneinheit vorhanden und angeordnet. Jeweils seitlich an den Teleskoprundrohren 11 der vertikalen Abschnitte 11 der T-Fußelemente 2 ist jeweils ein seitlicher Anbau 12 fest lösbar schwenkbar angebracht, und Der jeweilige seitliche Anbau 12 umfasst einen vertikalen Haltebereich 17 in Form eines Rundrohres, an dem jeweils ein Schwenkarm 13 mit zumindest einem zwischen zwei Armbereichen 32 vorhandenem Gelenk 33 und jeweils ein Schwenkarm 13 mit einem Armbereich 32 und jeweils einem Gelenk 33 im Bereich der jeweiligen Halterung und an einer Plattform 14, beispielsweise für einen Lautsprecher angeordnet sind. An einem der Schwenkarme 13 mit Gelenk 33 und zwei Armbereichen 32 ist eine Ablage 15 und an dem anderen Schwenkarm 13 mit Gelenk 33 und zwei Armbereichen 32 ist eine Halterung 16 für beispielsweise einen Tablet-PC vorhanden. Am linksseitigen vertikalen Haltebereich 17, an dem der Schwenkarm 13 mit Gelenk 33 für die Halterung 16 vorhanden ist, ist eine weitere Halterung 16 für ein Mikrofon direkt angeordnet. An den Stützelementen 6 sowie an den Schwenkarmen 13 bzw. deren zwei Armbereiche 32 und den seitlichen Anbauten 12 sind Kabelhalter 30 vorhanden.

Die Erweiterungselemente 7 sind wie zumindest zu den Figuren 1 und 3 beschrieben angeordnet. Eine Beleuchtung ist in diesem Beispiel nicht vorhanden.

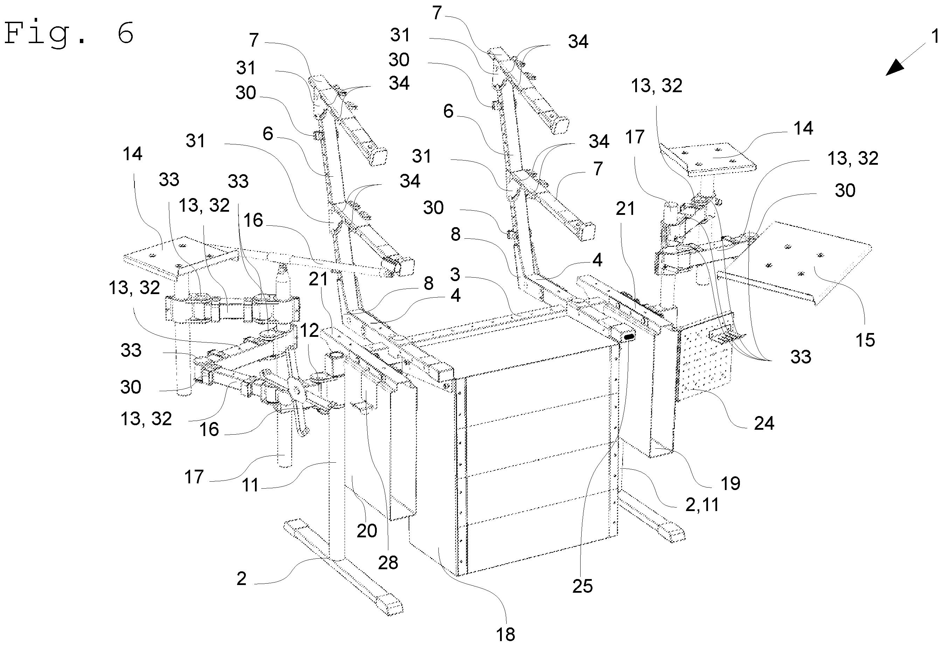

Die Fig. 6 zeigt ein erfindungsgemäßes modulares Instrumenten- und Geräte-Rack 1 gemäß der Figur 5, wobei abweichend oder ergänzend zur Figur 5 statt der ausziehbaren Ablagefläche 22 ein Gehäuse 18 angeordnet ist, wobei das Gehäuse 18 ein 19-Zoll-Rack-Gehäuse ist und das an den zwei Auflageelementen 4 angeordnet ist. Die Erweiterungselemente 7 sind wie zumindest zu den Figuren 1 und 3 beschrieben angeordnet. An den Stützelementen 6 sowie an den Schwenkarmen 13 bzw. deren zwei Armbereiche 32 und den seitlichen Anbauten 12 sind Kabelhalter 30 vorhanden. Am zusätzlichen Befestigungselement 21 und neben dem linken Aufnahmefach 19 oder Ablagefach 20 ist ein Kopfhörerhalter 28 angeordnet. Eine Beleuchtung ist in diesem Beispiel nicht vorhanden.

In den Figuren 1 bis 6 ist eine Ablageplatte 5, die auf die Auflageelemente 4 aufgelegt werden kann, nicht dargestellt.

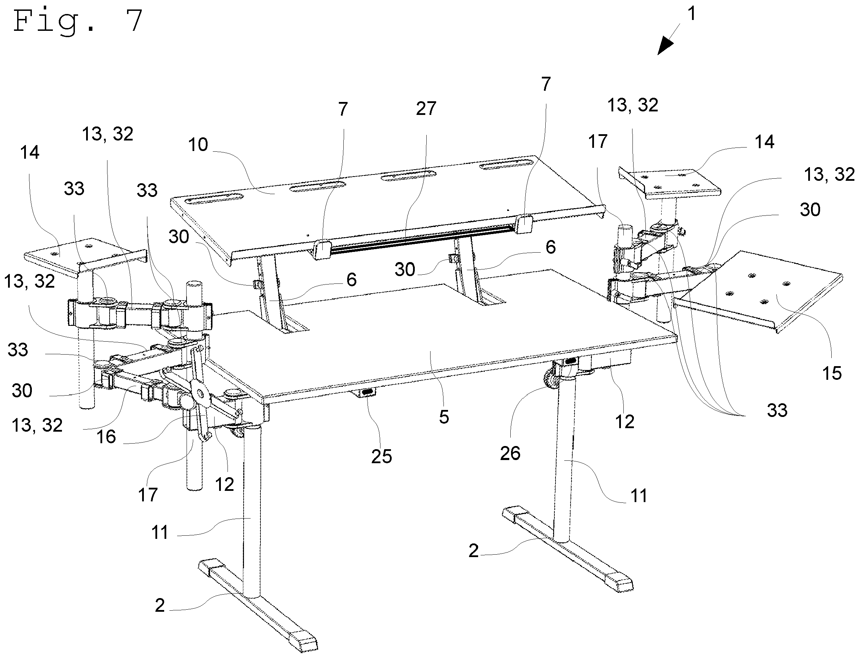

Die Fig. 7 zeigt ein erfindungsgemäßes modulares Instrumenten- und Geräte-Rack 1 gemäß der Figur 2, wobei abweichend und ergänzend zur Figur 2 auf den Auflageelementen 4 eine Ablageplatte 5 angeordnet ist, die wegen ihrer Tiefe Aussparungen für die Stützelemente 6 aufweist, und wobei die beiden Erweiterungselemente 7 einen Ablageboden 10 tragen und an den seitlichen Anbauten 12 am jeweiligen vertikalen Halteelement 17 jeweils eine Plattform 14, beispielsweise für einen Lautsprecher angeordnet ist. Die Erweiterungselemente 7 sind wie zumindest zu den Figuren 1 und 3 beschrieben angeordnet. Am vorderen Ende der beiden in einer Ebene paarweise benachbarten Erweiterungselemente 7 ist zwischen diesen Erweiterungselementen 7 eine Beleuchtung 27 als Langfeldleuchte oder als Leuchtstreifen angeordnet. An den Stützelementen 6 sowie an den Schwenkarmen 13 bzw. deren zwei Armbereiche 32 und den seitlichen Anbauten 12 sind Kabelhalter 30 vorhanden.

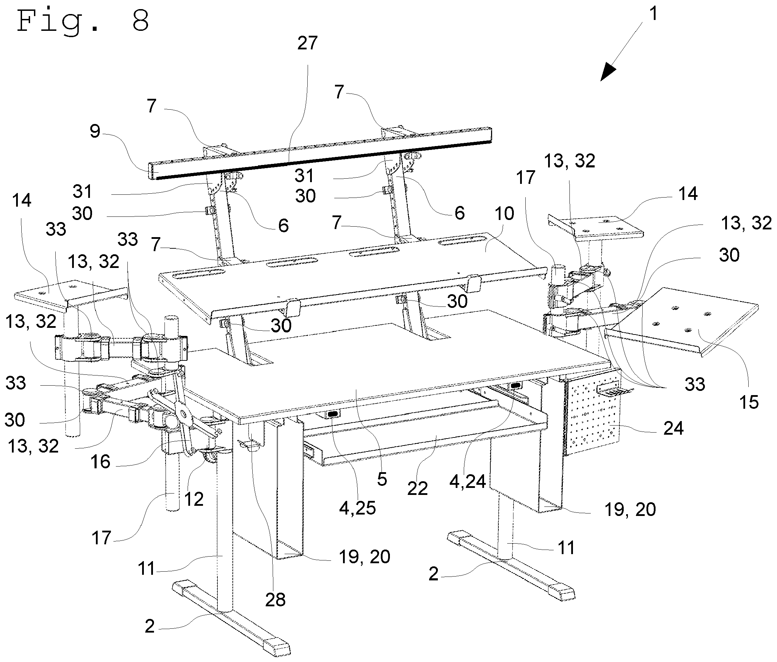

Weiterhin zeigt die Fig. 8 ein erfindungsgemäßes modulares Instrumenten- und Geräte-Rack 1 gemäß der Figur 5, wobei abweichend zu Figur 5 auf den Auflageelementen 4 eine Ablageplatte 5 angeordnet ist, die wegen ihrer Tiefe Aussparungen für die Stützelemente 6 aufweist. Die Erweiterungselemente 7 sind wie zumindest zu den Figuren 1 und 3 beschrieben angeordnet. Weiterhin tragen die beiden unteren paarweise benachbarten Erweiterungselemente 7 einen Ablageboden 10. Die beiden oberen paarweise benachbarten Erweiterungselemente 7 sind verkürzt ausgeführt und über einen Querhalter 9 miteinander verbunden. Zudem ist an dem Querhalter 9 eine Beleuchtung 27 als Langfeldleuchte oder als Leuchtstreifen vorhanden. An den Stützelementen 6 sowie an den Schwenkarmen 13 bzw. deren zwei Armbereiche 32 und den seitlichen Anbauten 12 sind Kabelhalter 30 vorhanden. Neben dem linken Aufnahmefach 19 oder Ablagefach 20 ist ein Kopfhörerhalter 28 angeordnet. An den Auflageelementen 4 über der ausziehbaren Ablagefläche 22 ist kein Gehäuse 18 als 19-Zoll-Gehäuse vorhanden.

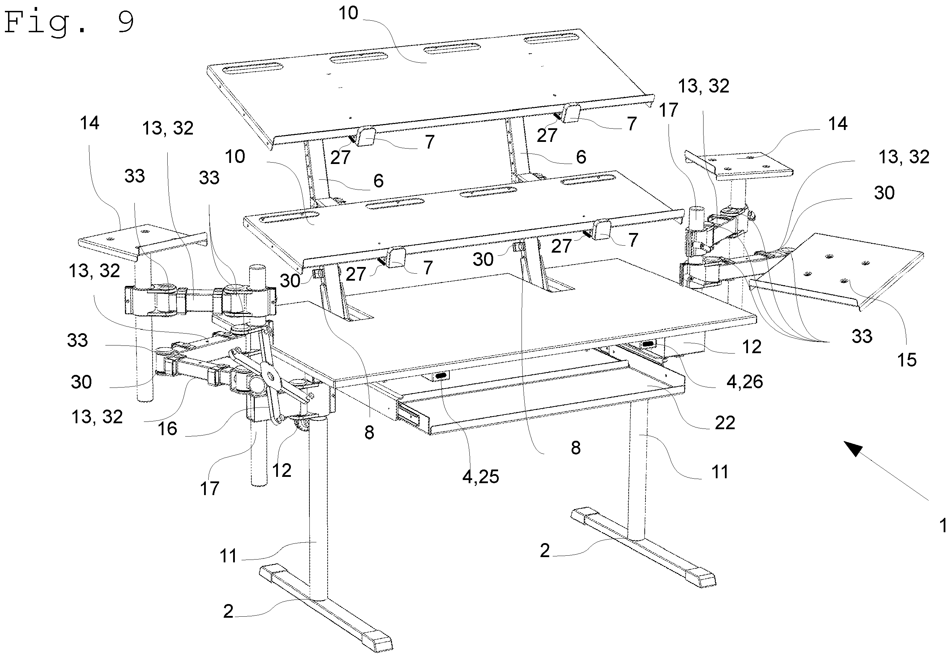

Die Fig. 9 zeigt ein erfindungsgemäßes modulares Instrumenten- und Geräte-Rack 1 gemäß der Figur 8, wobei abweichend oder ergänzend zur Figur 8 auf den Auflageelementen 4 eine Ablageplatte 5 angeordnet ist, die wegen ihrer Tiefe Aussparungen für die Stützelemente 6 aufweist. Die Erweiterungselemente 7 sind wie zumindest zu den Figuren 1 und 3 beschrieben angeordnet. Die beiden jeweils paarweise in einer Ebene angeordneten Erweiterungselemente 7 tragen einen Ablageboden 10. Zudem ist eine ausziehbare Ablagefläche 22 an den Auflageelementen 4 bzw. der Verbindungsbrücke 3 vorhanden. In diesen Ausführungsbeispiel sind zumindest das Gehäuse, die Aufnahmefächer und/oder Ablagefächer sowie eine Aufnahmelochplatte 24 nicht dargestellt. Die Beleuchtung 27 ist in diesem Fall jeweils am vorderen Ende an der Unterseite der beiden jeweils in einer Ebene paarweise benachbarten Erweiterungselemente 7 angeordnet. An den Stützelementen 6 sowie an den Schwenkarmen 13 bzw. deren zwei Armbereiche 32 und den seitlichen Anbauten 12 sind Kabelhalter 30 vorhanden.

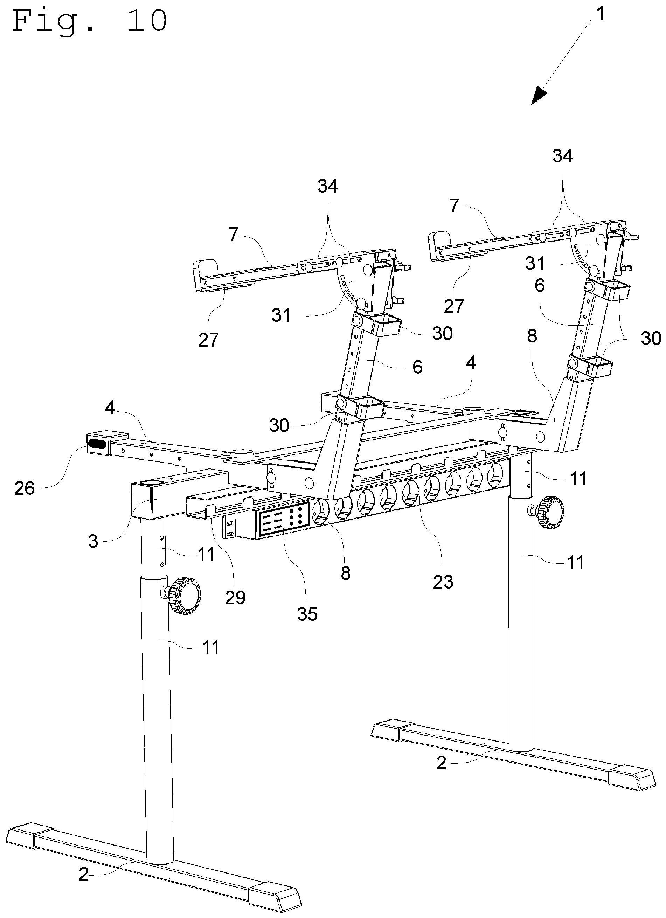

Die Fig. 10 zeigt ein erfindungsgemäßes modulares Instrumenten- und Geräte-Rack 1 gemäß der Figur 1 in rückwärtiger Ansicht, wobei abweichend oder ergänzend zu Figur 1 an der Verbindungsbrücke 3 eine Stromverteilerleiste 23 mit Steckdosen 23 und zudem ein Kabelkanal vorhanden ist. Die Stromverteilerleiste stellt zusätzlich Niederspannungen zur Verfügung. Dafür ist im linken Bereich ein Anschlussfeld 35 mit USB- und Rundstecker-Anschlussbuchsen für die Niederspannung vorhanden. Die Beleuchtung 27 ist in diesem Fall jeweils ebenfalls am vorderen Ende an der Unterseite der in einer Ebene paarweise benachbarten Erweiterungselemente 7 angeordnet. An den Stützelementen 6 sind Kabelhalter 30 vorhanden. Über der Stromverteilerleiste 23 und zu dieser parallel ist ein Sammelkabelkanal 29 vorhanden.

Am erfindungsgemäßen modularen Instrumenten- und Geräte-Rack 1 sind zudem, wie in den Figuren 1 bis 9 dargestellt, an einem der Auflageelemente 4 im Bereich des vorderen Endes an der Stirnseite, wie in den Figuren 1 bis 3, 5 bis 8 dargestellt, seitlich, wie in Figur 9 dargestellt, oder von unten, wie in Figur 4 dargestellt, ein Hauptschalter 25 zur Zu- und Abschaltung der gesamten Energieversorgung des Instrumenten- und Geräte-Rack 1 vorhanden. Wegen der Perspektive ist in Figur 10 der Hauptschalter 25 nicht dargestellt.

Weiterhin ist, wie in den Figuren 1, 3, 4, 7 bis 10 dargestellt, eine Beleuchtung 27 vorhanden. In der Figur 2 ist eine Beleuchtung vorgesehen, jedoch nicht dargestellt. Entsprechen sind in den Figuren 1 bis 4 und 7 bis 10 Beleuchtungsschalter 26 vorhanden, die ebenfalls an einem der Auflageelemente 4 im Bereich des vorderen Endes angeordnet sind, wobei sich die jeweiligen Auflageelemente 4 von denen mit Hauptschalter 25 unterscheiden. In Figur 2 und 10 ist der Beleuchtungsschalter 26 seitlich und in Figur 4 von unten im Bereich des vorderen Endes angeordnet.

Der jeweilige Hauptschalter 25 und der Beleuchtungsschalter 26 lassen sich jedoch auch an einem gemeinsamen Auflageelement 4 am vorderen Ende anordnen. So können der jeweilige Hauptschalter 25 und der Beleuchtungsschalter 26 beispielsweise jeweils seitlich am gemeinsamen Auflageelement 4 angeordnet sein. Ebenso kommt eine nach unten gerichtete Anordnung des jeweiligen Schalters 25, 26 in Betracht.

Die Hauptschalter 25 und/oder der Beleuchtungsschalter 26 kann zudem auch an einem oder an verschiedenen der Erweiterungselemente 7, entsprechend im vorderen Bereich and er Stirnseite, seitlich oder von unten und/oder an der Ablageplatte 5 angeordnet sein. So kann der jeweilige Schalter 25, 26 von unten oder von oben die Ablageplatte 5 eingelassen sein.

### Zusammenstellung der Bezugszeichen

1 - Instrumenten- und Geräte-Rack
2 - T-Fußelement
3 - Verbindungsbrücke
4 - Auflageelement
5 - Ablageplatte
6 - Stützelement
7 - Erweiterungselement
8 - Verbindungselement
9 - Querhalter
10 - Ablageboden
11 - vertikalen Abschnitt, Teleskoprundrohr
12 - seitlicher Anbau
13 - Schwenkarm
14 - Plattform
15 - Ablage
16 - Halterung
17 - vertikales Halteelement
18 - Gehäuse
19 - Aufnahmefach
20 - Ablagefach
21 - Befestigungselement
22 - ausziehbare Ablagefläche
23 - Steckdose, Stromverteilerleiste
24 - Aufnahmelochplatte
25 - Hauptschalter
26 - Beleuchtungsschalter
27 - Beleuchtung
28 - Kopfhörerhalter
29 -Sammelkabelkanal
30 - Kabelhalter
31 - Winkelverstellung, Winkelverstellblech
32 - Armbereich
33 - Gelenk
34 - Langloch
35 - Anschlussfeld

## Patentansprüche

1. Modulares Instrumenten- und Geräte-Rack (1) zur Aufnahme oder Ablage von elektronischen Musikinstrumenten und/oder Zubehörgeräten, wobei zwei teleskopartig höhenverstellbare T-Fußelemente (2) deren jeweilige vertikale Abschnitte (11) zumindest ein Teleskoprundrohr (11) aufweisen über eine Verbindungsbrücke (3) verbunden sind und an der Verbindungsbrücke (3) zumindest zwei Auflageelemente (4) für eine Ablageplatte (5) lösbar befestigt sind,
wobei an den zumindest zwei Auflageelementen (4) über jeweils ein Verbindungselement (8) jeweils ein Stützelement (6) und an dem jeweiligen Stützelement (6) jeweils zumindest ein Erweiterungselement (7) angeordnet ist, wobei das jeweilige zumindest eine Erweiterungselement (7) über eine Winkelverstellung (31) in der Neigung fest lösbar anordbar ist,
wobei das jeweils zumindest eine Erweiterungselement (7) an dem jeweiligen Stützelement (6) in zumindest einer zu den Auflageelementen (4) abweichenden Höhe anordbar ist und bei zwei oder mehr übereinander anzuordnenden Erweiterungselementen (7) die jeweiligen übereinander anzuordnenden Erweiterungselemente (7) jeweils an und mit dem gemeinsamen Stützelement (6) an dem jeweiligen Verbindungselement (8) angeordnet sind, wobei das jeweilige Stützelement (6) am jeweiligen Verbindungselement (8) in der Neigung verstellbar angeordnet ist und/oder dass das zumindest eine Verbindungselement (8) in der Lage und/oder Neigung mit dem jeweiligen Auflageelement (4) verstellbar verbunden oder angeordnet ist
und wobei einzelne oder gegebenenfalls paarweise oder gruppiert in der gleichen Höhe angeordnete Erweiterungselemente (7), unabhängig von den anderen, gegebenenfalls in einer anderen Erweiterungsebene angeordneten Erweiterungselementen, individuell anordbar bzw. ausrichtbar sind.

2. Rack nach Anspruch 1, wobei die jeweiligen Erweiterungselemente (7) am jeweiligen Stützelement (6) über die Winkelverstellung (31) in der Höhe, Lage oder Tiefe verstellbar angeordnet sind.

3. Rack nach einem der vorhergehenden Ansprüche,
wobei die jeweiligen Erweiterungselemente (7) jeweils oder einzeln in der Länge stufenlos veränderbar sind und/oder über einen Querhalter (9) miteinander verbunden sind und/oder
wobei die jeweiligen Erweiterungselemente (7) eine Ablage bilden oder einen Ablageboden (10) tragen.

4. Rack nach einem der vorhergehenden Ansprüche, wobei an zumindest einem der jeweiligen Teleskoprundrohre (11) ein seitlicher Anbau (12) fest lösbar und/oder schwenkbar und/oder vertikal verstellbar anbringbar ist.

5. Rack nach Anspruch 4, wobei der zumindest eine seitliche Anbau (12) zumindest einen Schwenkarm (13), eine Plattform (14), eine Ablage (15) und/oder eine Halterung (16) umfasst.

6. Rack nach Anspruch 5, wobei der zumindest eine seitliche Anbau (12) ein Rundrohr als vertikales Halteelement (17) umfasst, wobei der zumindest eine Schwenkarm (13), die zumindest eine Plattform (14), die zumindest eine Ablage (15) und/oder die zumindest eine Halterung (16) an dem vertikalen Haltebereich (17) in unterschiedlichen Höhen fest lösbar und/oder schwenkbar anbringbar sind.

7. Rack nach einem der vorhergehenden Ansprüche, wobei zumindest ein Gehäuse (18) und/oder zumindest ein Aufnahmefach (19) und/oder Ablagefach (20) vorhanden ist.

8. Rack nach Anspruch 7, wobei das zumindest eine Gehäuse (18) und/oder das zumindest eine Aufnahmefach (19) und/oder Ablagefach (20) an den zumindest zwei Auflageelementen (4) und/oder an zusätzlichen Befestigungselementen (21) an der Verbindungsbrücke (3) und/oder an der Verbindungsbrücke (3) und/oder am vertikalen Abschnitt (11) zumindest eines der T-Fußelemente (2) lösbar befestigt angeordnet sind.

9. Rack nach einem der vorhergehenden Ansprüche,
wobei
eine ausziehbare Ablagefläche (22) an den Auflageelementen (4) und/oder zwischen den Aufnahmefächern und/oder zwischen zwei Erweiterungselementen (7) und/oder an zusätzlichen Befestigungselementen (21) an der Verbindungsbrücke (3) und/oder an der Verbindungsbrücke (3) angeordnet ist.

10. Rack nach einem der vorhergehenden Ansprüche 7 oder 8,
wobei Gehäuse (18) ein 19-Zoll-Rack-Gehäuse ist.

11. Rack nach einem der vorhergehenden Ansprüche,
wobei an den Auflageelementen (4) und/oder an der Verbindungsbrücke (3) zumindest eine Steckdose (23) oder eine Stromverteilerleiste (23) oder Befestigungen für Steckdosen (23) oder Stromverteilerleisten (23) angeordnet sind, wobei die Stromverteilerleiste Netzspannung und/oder Niederspannung in zumindest einem Spannungsbereich bereitstellen.

12. Rack nach einem der vorhergehenden Ansprüche,
wobei zumindest eine Beleuchtung (27) vorgesehen ist.

13. Rack nach einem der vorhergehenden Ansprüche,
wobei ein Hauptschalter (25) und/oder Beleuchtungsschalter (26) im vorderen Bereich an zumindest einem der Auflageelementen (4) und/oder Erweiterungselemente (7) und/oder an der Ablageplatte (5) vorhanden ist.

14. Rack nach einem der vorhergehenden Ansprüche 7, 8 oder 10,
wobei am zumindest einen Gehäuse (18) und/oder am zumindest einen Aufnahmefach (19) und/oder am vertikalen Abschnitt (11) zumindest eines der T-Fußelemente (2) eine feststehende oder bewegliche Aufnahmelochplatte (24) angeordnet ist.

## Claims

1. Modular instrument and device rack (1) for holding or storing electronic musical instruments and/or accessory devices, wherein two telescopically height-adjustable T-shaped foot elements (2), the respective vertical sections (11) of which have at least one telescopic round tube (11), are connected via a connecting bridge (3), and at least two bearing elements (4) for a storage plate (5) are detachably fastened to the connecting bridge (3),
whereby on the at least two bearing elements (4) each a support element (6) is arranged via a connecting element (8), and on each support element (6) at least one extension element (7) is arranged, whereby the respective at least one extension element (7) can be detachably fixed in angle adjustment (31),
whereby the at least one extension element (7) on the respective support element (6) can be arranged at a height different from the bearing elements (4) andwhen two or more extension elements (7) are to be arranged on top of each other, the respective extension elements (7) to be arranged on top of each other are arranged on and with the common support element (6) on the respective connecting element (8), whereby the respective support element (6) is arranged on the respective connecting element (8) adjustable in angle and/or that the at least one connecting element (8) is adjustable in position and/or angle with the respective support element (4)
and whereby individual or optionally paired or grouped extension elements (7) arranged at the same height, independent of the other, optionally arranged in a different extension plane, are individually adjustable or alignable.

2. Rack according to claim 1,
whereby the respective extension elements (7) on the respective support element (6) are adjustable in height, position, or depth via the angle adjustment (31).

3. Rack according to one of the preceding claims,
whereby the respective extension elements (7) are each or individually continuously variable in length and/or connected together via a transverse holder (9) and/or whereby the respective extension elements (7) form a shelf or carry a shelf bottom (10).

4. Rack according to one of the preceding claims,
whereby on at least one of the respective telescopic round tubes (11) a lateral attachment (12) can be fixed detachably and/or pivotably and/or vertically adjustable.

5. Rack according to claim 4,
wherein the at least one lateral attachment (12) includes at least one pivot arm (13), a platform (14), a shelf (15), and/or a bracket (16).

6. Rack according to claim 5,
wherein the at least one lateral attachment (12) includes a round tube as a vertical support element (17), and wherein the at least one pivot arm (13), the at least one platform (14), the at least one shelf (15), and/or the at least one bracket (16) are detachably and/or pivotally attachable at different heights on the vertical holding area (17).

7. Rack according to one of the preceding claims,
wherein there is at least one housing (18) and/or at least one holding compartment (19) and/or a storage compartment (20).

8. Rack according to claim 7,
wherein the at least one housing (18) and/or the at least one holding compartment (19) and/or storage compartment (20) are detachably mounted on the at least two bearing elements (4) and/or additional mounting elements (21) on the connecting bridge (3) and/or at the vertical section (11) of at least one of the T-foot elements (2).

9. Rack according to one of the preceding claims,
wherein a pull-out shelf surface (22) is arranged on the bearing elements (4) and/or between the holding compartments and/or between two extension elements (7) and/or on additional mounting elements (21) on the connecting bridge (3).

10. Rack according to any one of the preceding claims 7 or 8,
wherein the housing (18) is a 19-inch rack housing.

11. Rack according to one of the preceding claims,
wherein at least one socket (23) or a power distribution unit (23) or fixings for sockets (23) or power distribution unit (23) are arranged on the bearing elements (4) and/or the connecting bridge (3), wherein the power distribution unit provides mains voltage and/or low voltage in at least one voltage range.

12. Rack according to one of the preceding claims,
wherein at least one lighting (27) is provided.

13. Rack according to one of the preceding claims,
wherein a main switch (25) and/or light switch (26) are located in the front area on at least one of the bearing elements (4) and/or extension elements (7) and/or on the storage plate (5).

14. Rack according to any of the preceding claims 7, 8 or 10,
wherein on at least one housing (18) and/or at least one holding compartment (19) and/or on the vertical section (11) of at least one of the T-foot elements (2), a fixed or mounting hole plate (24) is arranged.

## Revendications

1. Support modulaire pour instruments et dispositifs (1) destiné à recevoir ou ranger des instruments de musique électroniques et/ou des dispositifs accessoires, dans lequel deux éléments de pied en forme de T réglables en hauteur de manière télescopique (2), dont les deux sections verticales (11) respectives présentent au moins un tube rond télescopique (11), sont reliés par un pont de liaison (3) et au moins deux éléments d'appui (4) pour un plateau support (5) sont fixés de manière libérable sur le pont de liaison (3),
au moins un élément de support (6) étant agencé sur chacun des deux éléments d'appui (4) au moyen d'un élément de liaison (8) respectif et au moins un élément d'extension (7) étant agencé sur chacun des élément de support (6), chacun dudit au moins un élément d'extension (7) pouvant être agencé de manière sûre et libérable à une inclinaison au moyen d'un réglage angulaire (31),
chacun de l'au moins un élément d'extension (7) pouvant être disposé sur l'élément de support (6) respectif à au moins une hauteur différente de celle des éléments d'appui (4) et, en présence de deux ou plusieurs éléments d'extension (7) à disposer l'un au-dessus de l'autre, les éléments d'extension (7) respectifs à disposer l'un au-dessus de l'autre étant chacun disposéssur et avec l'élément d'appui (6) commun sur l'élément de liaison (8) respectif, l'élément d'appui (6) respectif étant agencé sur l'élément de liaison (8) respectif de sorte à pouvoir être réglé en inclinaison et/ou que l'au moins un élément de liaison (8) est agencé ou relié à l'élément d'appui (4) respectif de sorte à pouvoir être réglé en position et/ou en inclinaison
et des éléments d'extension (7) individuels ou appairés ou groupés agencés à la même hauteur pouvant être agencés ou orientés individuellement, indépendamment des autres éléments d'extension, le cas échéant agencés dans un autre plan d'extension.

2. Support selon la revendication 1,
dans lequel chacun des éléments d'extension (7) est agencé sur l'élément de support (6) respectif de sorte à pouvoir être réglé en hauteur, position ou profondeur au moyen du réglage angulaire (31).

3. Support selon l'une des revendications précédentes,
dans lequel les éléments d'extension (7) respectifs sont chacun ou individuellement réglables en longueur en et/ou sont reliés les uns aux autres au moyen d'un support transversal (9) et/ou les éléments d'extension (7) respectifs forment un plateau ou portent une tablette (10).

4. Support selon l'une des revendications précédentes,
dans lequel un ajout latéral (12) peut être fixé de manière sûre et libérable et/ou de façon à pouvoir pivoter et/ou de manière réglable verticalement sur au moins l'un des tubes ronds télescopiques (11) respectifs.

5. Support selon la revendication 4,
dans lequel l'au moins un ajout latéral (12) comprend au moins un bras pivotant (13), une plateforme (14), un plateau (15) et/ou un support (16).

6. Support selon la revendication 5,
dans lequel l'ajout latéral (12) comprend un tube rond en tant qu'élément de serrage vertical (17), l'au moins un bras pivotant (13), l'au moins une plateforme (14), l'au moins un plateau (15) et/ou l'au moins un support (16) pouvant être agencés de manière sûre et libérable et/ou de façon à pouvoir pivoter à différentes hauteurs dans la zone de serrage vertical (17).

7. Support selon l'une des revendications précédentes,
dans lequel est prévu au moins un boîtier (18) et/ou au moins un bac de rangement (19) et/ou un casier (20).

8. Support selon la revendication 7,
dans lequel l'au moins un boîtier (18) et/ou l'au moins un bac de rangement (19) et/ou un casier (20) sont agencés de manière sûre et libérable sur les au moins deux éléments d'appui (4) et/ou sur les éléments de fixation supplémentaires (21) sur le pont de liaison (3) et/ou sur le pont de liaison (3) et/ou sur la section verticale (11) d'au moins l'un des éléments de pied en forme de T (2).

9. Support selon l'une des revendications précédentes,
dans lequel une surface de travail coulissante (22) est agencée sur les éléments d'appui (4) et/ou entre les bacs de rangement et/ou entre deux éléments d'extension (7) et/ou sur des éléments de fixation supplémentaire (21) sur le pont de liaison (3) et/ou sur le pont de liaison (3).

10. Support selon l'une des revendications précédentes 7 ou 8,
dans lequel le boîtier (18) est un boîtier pour rack 19 pouces.

11. Support selon l'une des revendications précédentes,
dans lequel au moins une prise de courant (23) ou une multiprise (23) ou des fixations pour prises de courant (23) ou multiprises (23) mettant à disposition la tension réseau et/ou la basse tension dans au moins une plage de tension sont agencés sur les éléments d'appui (4) et/ou sur le pont de liaison (3).

12. Support selon l'une des revendications précédentes,
dans lequel est prévu au moins un éclairage (27).

13. Support selon l'une des revendications précédentes,
dans lequel un interrupteur principal (25) et/ou un interrupteur d'éclairage (26) sont prévus dans la partie antérieure sur au moins l'un des éléments d'appui (4) et/ou les éléments d'extension (7) et/ou sur le plateau support (5).

14. Support selon l'une des revendications précédentes 7, 8 ou 10,
dans lequel une plaque support perforée fixe ou mobile (24) est agencée sur l'au moins un boîtier (18) et/ou sur l'au moins un bac de rangement (19) et/ou sur la section verticale (11) d'au moins l'un des éléments de pied en forme de T (2).
